# EUROPEAN PATENT SPECIFICATION

(11) **EP 0 494 954 B1**
(45) Date of publication and mention of the grant of the patent: **15.03.2000**
(21) Application number: 90915564.0
(22) Date of filing: 27.09.1990
(51) Int. Cl.: D01F 9/127

(54) **Battery and carbon fibril bundles for its manufacture**
Batterie und Kohlenstoffibrilbündel zur Herstellung derselben
Batterie et fibrilles de carbone pour sa fabrication

(30) Priority: 28.09.1989 US 413837; 28.09.1989 US 413838; 28.09.1989 US 413844
(43) Date of publication of application: 22.07.1992
(60) Divisional application: 99113516.1
(73) Proprietor: HYPERION CATALYSIS INTERNATIONAL, INC., Lexington, MA 02173 (US)
(72) Inventor: FRIEND, Stephen, O., Oxford, MA 01921 (US); ATKINS, Jaspard, Harvey, Westwood, MA 02090 (US); TENNENT, Howard, G., Kennett Square, PA 19348 (US); HAUSSLEIN, Robert, Lexington, MA 02173 (US); MOY, David, Winchester, MA 01890 (US); CHISHTI, Asif, Lowell, MA 01854 (US)
(74) Representative: Kolb, Helga, Dr. Dipl.-Chem.
(86) International application number: US9005498
(87) International publication number: WO9105089

(56) References cited:
- WO-A-89/07163
- JP-A- 57 117 622
- JP-A- 59 152 299
- US-A- 4 518 575
- US-A- 4 663 230
- Journal of Catalysis, Vol. 30, 1976 R.T.K. BAKER et al., "Formation of Filamentour Carbon from Iron, Cobalt and Chromium Catalyzed Decomposition of Acctylene" pages 86-95.
- Journal of Crystal Growth, Vol. 32, 1976 A. OBERLIN et al., "Filamentous Growth of Carbon Through Benzene Decomposition" pages 335-349.

## Description

### Background of the Invention

This invention relates to electrochemical cells and to preparing carbon fibrils.

Batteries are a type of electrochemical cell containing an anode, a cathode, and an electrolyte in which the anode and cathode are permanently contained within the cell. Batteries containing a metal anode, metal oxide cathode, and an electrolyte are known. Because metal oxides generally are poor electrical conductors (their conductivities are in the semiconducting to insulating range), an electrically conductive material is added to the metal oxide to render the cathode electrically conductive.

Fuel cells are a type of electrochemical cell in which the cathodic and anodic reactants are fed to the cell from an external source during operation, rather than being permanently contained within the cell. The reactants contact electrodes which catalyze the reduction of the cathodic reactant and the oxidation of the anodic reactant; the electrodes themselves are not consumed in the reaction. The electrodes also collect the current generated as a result of the electrochemical oxidation and reduction reactions.

Metal-air cells are similar to fuel cells except that only the cathodic reactant is fed to the cell. The anodic reactant is a metal which forms a permanent part of the cell.

Carbon microfibers (i.e. fibers having diameters less than 1 micron) are also known. Microfibers having diameters less than 0.5 micron are referred to as fibrils. They may be prepared by contacting a metal-containing catalyst with a carbon-containing gas at elevated temperatures.

### Summary of the Invention

In one aspect, the invention features an improved battery having an anode, a cathode that includes a chemically reducible material into which is incorporated an amount of electrically conductive carbon microfibers sufficient to enhance the electrical conductivity of the chemically reducible material, and an electrolyte.

In preferred embodiments, the microfibers have diameters no greater than 0.1 micron and length to diameter ratios of at least 5. Even more preferred are carbon microfibers that are tubes having graphitic layers that are substantially parallel to the microfiber axis and diameters between 3.5 and 75 nanometers, inclusive, as described in Tennent, U.S. Pat. No. 4,663,230 ("Carbon Fibrils, Method for Producing Same and Compositions Containing Same"), Tennent et al., U.S.S.N. 871,676 filed June 6, 1986 ("Novel Carbon Fibrils, Method for Producing Same and Compositions Containing Same"), Tennent et al., U.S.S.N. 871,675 filed June 6, 1986 ("Novel Carbon Fibrils, Method for Producing Same and Encapsulated Catalyst"), Snyder et al., U.S.S.N. 149,573 filed January 28, 1988 ("Carbon Fibrils"), Mandeville et al., U.S.S.N. 285,817 filed December 16, 1988 ("Fibrils"), and McCarthy et al., U.S.S.N. 351,967 filed May 15, 1989 ("Surface Treatment of Carbon Microfibers"), all of which are assigned to the same assignee as the present application. One aspect of substantial parallelism is that the projection of the graphite layers on the microfiber axis extends for a relatively long distance in terms of the external diameter of the microfiber (e.g., at least two microfiber diameters, preferably at least five diameters), as described in Snyder et al., U.S.S.N. 149,573. These microfibers preferably are also substantially free of a continuous thermal carbon overcoat (i.e. pyrolytically deposited carbon resulting from thermal cracking of the gas feed used to prepare the microfibers). These microfibers also are preferably in the form of aggregates in which individual microfibers are randomly entangled with each other or oriented substantially parallel to each other.

Preferred batteries include both primary (i.e. non-rechargeable) batteries and secondary (i.e. rechargeable) batteries. Examples of preferred batteries include reserve batteries, alkaline batteries (e.g., alkaline zinc - manganese dioxide batteries), and Leclanche batteries. The chemically reducible material for the cathode preferably includes a metal oxide (e.g., MnO₂, HgO, Ag₂O, AgO, PbO₂, or NiOOH), a metal chloride (e.g., CuCl), a metal sulfide (e.g., FeS), or sulfur. The anode preferably includes Zn, Li, Cd, Ag, Mg, Fe, Na, Li-Al alloy, or Pb metal.

In the case of a Leclanche or alkaline zinc - manganese dioxide battery, the amount of microfibers incorporated into the cathode preferably is less than 0.5 grams per gram of chemically reducible material, more preferably less than 0.2 grams.

The invention also features a method for preparing the battery. Preferably, the microfibers are milled or co-milled with the chemically reducible material. Preferred milling methods include mechanical and chemical milling (by exposure to a chemical reagent that decreases the microfiber length, e.g., by chopping the microfiber). A preferred method for preparing the battery involves growing the chemically reducible material in situ within the electrically conductive network formed by the carbon microfibers.

The invention provides a battery having high energy density. The battery exhibits a long discharge lifetime and high utilization of the chemically reducible material. The microfibers enable the cathode to retain an effective amount of electrolyte for efficient operation. This ability is maintained even after vigorously mixing the microfibers and chemically reducible material to form the cathode. Moreover, high amounts of the chemically reducible material can be incorporated in the cathode.

In a second aspect, the invention features an improved electrochemical cell that includes a catalytic electrode on which an electrochemical reaction occurs into which is incorporated an amount of electrically conductive carbon microfibers having diameters less than or equal to 0.1 micron sufficient to enhance the electrical conductivity of the electrode.

In preferred embodiments, the electrochemical cell is a fuel cell (e.g., a hydrogen/oxygen fuel cell) or a metal-air cell (e.g., in which the metal is zinc).

Preferred microfibers have length to diameter ratios of at least 5. Even more preferred are carbon microfibers that are tubes having graphitic layers that are substantially parallel to the microfiber axis and diameters between 3.5 and 75 nanometers, inclusive, as described in Tennent, U.S. Pat. No. 4,663,230 ("Carbon Fibrils, Method for Producing Same and Compositions Containing Same"), Tennent et al., U.S.S.N. 871,676 filed June 6, 1986 ("Novel Carbon Fibrils, Method for Producing Same and Compositions Containing Same"), Tennent et al., U.S.S.N. 871,675 filed June 6, 1986 ("Novel Carbon Fibrils, Method for Producing Same and Encapsulated Catalyst"), Snyder et al., U.S.S.N. 149,573 filed January 28, 1988 ("Carbon Fibrils"), Mandeville et al., U.S.S.N. 285,817 filed December 16, 1988 ("Fibrils"), and McCarthy et al., U.S.S.N. 351,967 filed May 15, 1989 ("Surface Treatment of Carbon Microfibers"), all of which are assigned to the same assignee as the present application. One aspect of substantial parallelism is that the projection of the graphite layers on the microfiber axis extends for a relatively long distance in terms of the external diameter of the microfiber (e.g., at least two microfiber diameters, preferably at least five diameters), as described in Snyder et al., U.S.S.N. 149,573. These microfibers preferably are also substantially free of a continuous thermal carbon overcoat (i.e. pyrolytically deposited carbon resulting from thermal cracking of the gas feed used to prepare the microfibers). These microfibers also are preferably in the form of aggregates in which individual microfibers are randomly entangled with each other or oriented substantially parallel to each other.

Incorporating small diameter carbon microfibers in one or both of the catalytic electrodes enables the electrode to collect current efficiently. The microfibers also increase the surface area of the electrode.

In a third aspect, the invention features a fibril aggregate that includes a multiplicity of carbon fibrils whose longitudinal axes have substantially the same relative orientation, each of the fibrils characterized as having graphitic layers that are substantially parallel to its longitudinal axis and being free of a continuous thermal carbon overcoat (i.e. pyrolytically deposited carbon resulting from thermal cracking of the gas feed used to prepare the fibrils). One aspect of substantial parallelism is that the projection of the graphitic layers on the fibril's longitudinal axis extends for a relatively long distance in terms of the external diameter of the fibril (e.g., at least two fibril diameters, preferably at least five diameters), as described in Snyder et al., U.S.S.N. 149,573 filed January 28, 1988 and entitled "Carbon Fibrils" which is assigned to the same assignee as the present application. Carbon fibrils having substantially parallel graphitic layers are also described in Tennent, U.S. Pat. No. 4,663,230 ("Carbon Fibrils, Method for Producing Same and Compositions Containing Same"), Tennent et al., U.S.S.N. 871,676 filed June 6, 1986 ("Novel Carbon Fibrils, Method for Producing Same and Compositions Containing Same"), Tennent et al., U.S.S.N. 871,675 filed June 6, 1986 ("Novel Carbon Fibrils, Method for Producing Same and Encapsulated Catalyst"), Mandeville et al., U.S.S.N. 285,817 filed December 16, 1988 ("Fibrils"), and McCarthy et al., U.S.S.N. 351,967 filed May 15, 1989 ("Surface Treatment of Carbon Microfibers"), all of which are assigned to the same assignee as the present application.

In preferred embodiments, the diameters of at least 90% (and, more preferably, substantially all) of the fibrils in the aggregate have diameters between 3.5 and 75 nanometers, inclusive. Similarly, at least 90% (and, more preferably, substantially all) of the individual fibrils in the aggregate have a length to diameter ratio of at least 5. The diameter of the aggregate preferably is between 0.05 and 50 µm, inclusive, and the length preferably is between 0.1 and 1000 µm, inclusive.

In a fourth aspect, the invention features a process for preparing an aggregate of carbon fibrils by contacting a particulate metal catalyst deposited on a support having one or more readily cleavable planar surfaces and a surface area of at least 1 m²/g with a carbon-containing gas in a reactor at reaction conditions including temperature sufficient to produce the aggregate.

In preferred embodiments, the support is a metal oxide, e.g., γ-alumina or magnesia, both of which are in the form of aggregates of tabular, prismatic, or platelet crystals. Preferred catalysts include iron. They may further include at least one element chosen from Group V (e.g., vanadium), VI (e.g., molybdenum, tungsten, or chromium), VII (e.g., manganese), or the lanthanides (e.g., cerium). Also preferred are catalysts that include cobalt, nickel, manganese, or a combination of copper and zinc. The catalysts may be prepared using either aqueous or non-aqueous solvents.

Preferred reaction temperatures are between 400 and 850°C, more preferably between 600 and 750°C. Preferred aggregates are those aggregates described above in which the longitudinal axes of the fibrils making up the aggregate all have substantially the same relative orientation.

The invention also features a particulate, carbon fibril-forming, metal catalyst deposited on a support having one or more readily cleavable planar surfaces and a surface area of at least 1 m²/g. Preferred catalyst and support materials are those described above.

The invention provides a process for preparing fibril aggregates in which the texture of the aggregate is controlled by the choice of catalyst support. Using supports having one or more readily cleavable planar surfaces produces fibril aggregates having the appearance of combed yarn in which the individual fibrils are straight to slightly bent or kinked. Aggregates having loose, open mat textures in which the individual fibrils are straight to slightly bent or kinked may also be produced. These aggregates are readily dispersed, making them useful in composite fabrication where uniform properties throughout the structure are desired. The substantial linearity of the individual fibril strands also makes the aggregates useful in EMI shielding and electrical applications, e.g., the devices described in Friend et al., U.S.S.N. 413844 entitled "Battery" and Friend et al., US-A-5110693 entitled "Electrochemical Cell", both of which were filed on the same day as the present application, assigned to the same assignee as the present application.

Other features and advantages of the invention will be apparent from the following description of the preferred embodiments thereof, and from the claims.

### Description of the Preferred Embodiments

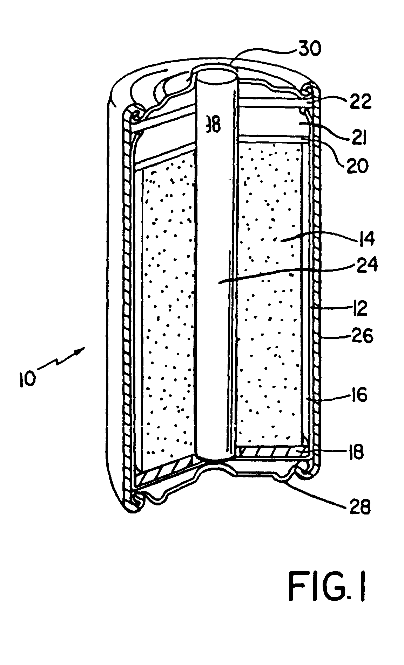

We first briefly describe the Figure.

The Figure is a cross-sectional view, partially broken away, of a battery embodying the invention.

### Battery

Carbon microfibers are suitable in the cathodes of a wide variety of battery systems. Typically, these batteries feature an electrically conductive metal that acts as an anode and a chemically reducible material as the cathode. The particular cathode material is chosen based upon the anode material, as one of ordinary skill in the art will readily appreciate. Examples of suitable anode-cathode combinations (taken from Handbook of Batteries and Fuel Cells, ed. David Linden, ch. 1, p. 10, McGraw-Hill (1984)) are shown below in Table I:

**Table I**

| A. Primary Batteries | | |
|---|---|---|
| Battery System | Anode | Cathode |
| Leclanche | Zn | MnO₂ |
| Magnesium | Mg | MnO₂ |
| Alkaline MnO₂ | Zn | MnO₂ |
| Mercury | Zn | HgO |
| Mercad | Cd | HgO |
| Silver Oxide | Zn | Ag₂O |
| Li/MnO₂ Li | MnO₂ | |

| B. Reserve Batteries | | |
|---|---|---|
| Battery System | Anode | Cathode |
| Cuprous chloride | Mg | CuCl |
| Zinc/silver oxide | Zn | AgO |

| C. Secondary Batteries | | |
|---|---|---|
| Battery System | Anode | Cathode |
| Lead-acid | Pb | PbO₂ |
| Edison | Fe | NiOOH |
| Nickel-cadmium | Cd | NiOOH |
| Silver-zinc | Zn | AgO |
| Nickel-zinc | Zn | NiOOH |
| Silver-cadmium | Cd | AgO |
| High temperature | Li(Al) | FeS |
| High temperature | Na | S |

The carbon microfibers increase the electrical conductivity of the cathode by forming an effective electrically conductive network throughout the chemically reducible material and physically bind or absorb liquid electrolyte dispersed throughout the cathode; the latter feature is particularly useful in Leclanche cells. Preferred microfibers are carbon fibrils having small diameters (preferably between about 3.5 and 75 nanometers), length to diameter ratios of at least 5, and graphitic layers that are substantially parallel to the fibril axis that are also substantially free of a continuous thermal carbon overcoat, as described in Tennent, U.S. Pat. No. 4,663,230; Tennent at al., U.S.S.N. 871,676; Tennent et al., U.S.S.N. 871,675; Snyder et al., U.S.S.N. 149,573; and Mandeville et al., U.S.S.N. 285,817. The fibrils may also be treated to introduce oxygen-containing functional groups onto the fibril surface, as described in McCarthy et al., U.S.S.N. 351,967.

When produced in useful quantities, the fibrils are in the form of aggregates of individual fibrils. For example, the process described in Snyder et al., U.S.S.N. 149,573 yields aggregates of randomly entangled fibrils resembling bird nests. A second type of aggregate consists of clusters of individual fibrils in which the fibrils are oriented substantially parallel to each other, giving the aggregate the appearance of combed yarn. The lengths and diameters of fibrils in each cluster are essentially uniform, although they may vary from cluster to cluster.

The substantially parallel graphitic layers of the individual fibrils are desirable because they enhance electrical conductivity. The small diameters enhance electrolyte absorption. The lack of a continuous thermal carbon overcoat leads to enhanced electrical conductivity and oxidation resistance. The particular balance of properties chosen depends on the application for which the battery is intended. For example, in the case of alkaline batteries, it is desirable to minimize the tendency of the cathode mixture to "spring back" when incorporated into the battery, thereby maximizing the amount of chemically reducible material that can be incorporated into the battery. Spring back is decreased by milling the fibrils to decrease the size of the fibril aggregates and the lengths of individual fibrils, e.g., by mechanical milling using a ball or stirred ball mill or by chemical milling using chemical reagents such as those described in McCarthy et al., U.S.S.N. 351,967. Although milling reduces electrolyte absorption, the reduction is compensated by the decrease in spring back. The milling time is selected to achieve an optimal balance between electrolyte absorption and spring back. On the other hand, for batteries such as Leclanche cells, high electrolyte absorption is more critical than spring back. Thus, for these batteries fibrils with higher length to diameter ratios than in the case of alkaline batteries are desirable.

The Figure depicts a Leclanche battery 10 having a zinc anode 12 and a cathode 14 that is a compressed mixture of a minor portion of carbon fibrils and a major portion of manganese dioxide. An aqueous electrolyte is dispersed throughout cathode 14. Zinc anode 12 is shaped to form an enclosure (e.g., a can) for housing cathode 14.

Battery 10 also features a separator 16 interposed between anode 12 and cathode 14 to prevent electrical contact between the two from being established. A sealing washer 18 placed at the bottom of battery 10 also helps keep anode 12 and cathode 14 from contacting each other. A compression washer 22 and a vent washer 20 placed on top of cathode 14 help seal the contents of battery 10. An air space 21 between the two washers is left. A carbon rod 24 inserted through the two washers so that it contacts cathode 14 forms a current collector for collecting current from cathode 14 when battery 10 is in use.

A jacket 26 surrounds the battery components and provides environmental protection. A metal bottom 28 and a metal top 30 provide electrical connections to an external circuit (not shown).

A Leclanche battery having a zinc anode, zinc chloride electrolyte, and a cathode made of manganese dioxide admixed with carbon fibrils (prepared according to the methods in the above-described patent and patent applications) was prepared as follows.

To prepare the cathode mixture, the fibrils, manganese dioxide, and mercuric chloride corrosion inhibitor were added to the bowl of a Kitchen Aid Doughmixer (model KSM90 with flat beater) and dry-mixed for 2 minutes at the slowest speed. The zinc chloride electrolyte was then added to the mixture from a sprinkler. bottle over a period of 30-45 seconds with stirring. Following the electrolyte addition, the Doughmixer speed was increased to the number 3 setting. Mixing continued at this speed for 2 1/2 minutes, after which the mixture was transferred to a glass bowl and then stored overnight inside a sealed plastic bag.

To assemble the battery, a paper liner was inserted into a zinc can (the anode). A sealing washer was then placed in the bottom of the lined can. After taring the lined can, the desired amount of the cathode mixture was added; during addition, the mixture was manually compressed using, as a compression tool, a 2.54cm [1 inch] diameter by [3 1/2 inch] 8.89cm long solid cylinder. The proper amount of cathode mixture was the amount necessary to fill the can to within a half inch of the top with 6.9 x 10⁵ Pa - 13.8 x 10⁵ Pa [100-200 psi] pressure.

Following addition of the cathode mixture, a compression washer was placed on the face of a compression tool sized to fit into the can for a depth of 1.27cm [0.5 inch]; the face of the tool was machined to form a dimple for holding and centering the compression washer. The tool was then inserted into the zinc can and the compression washer driven into the can under an applied pressure of 6.9 x 10⁵ Pa - 13.8 x 10⁵ Pa [100-200 psi].

Next, the compression tool was replaced with a centering tool seated in a 1.814 x 10³ kg [2 ton] hyraulic press with a handle modified to accept a torque wrench for inserting a carbon rod into the battery. The centering tool was a [one inch] 2.54cm long cylinder having an outside diameter designed to fit into the zinc can and an inside diameter designed to hold the carbon rod and keep it centered while it is forced down into the cathode mixture. The carbon rod was placed in the center of the tool and driven down into the battery to the top of the tool. The tool was then removed and the carbon rod driven down to where it touched bottom in the hydraulic press.

Following insertion of the carbon rod, a paper seal (vent washer) was mounted on the centering tool and driven down into the battery to about 0.3175cm [1/8 inch] from the top of the can. This left an empty expansion volume in the battery between the compression washer and the paper seal. A small metal cap was then placed over the exposed end of the carbon rod using the hydraulic press to seat it. Finally, hot sealing wax was poured around the carbon rod on top of the paper seal to form a water-tight seal between the rod and the walls of the zinc can.

Table II contains three battery compositions prepared as described above. Each features a zinc anode, an aqueous zinc chloride electrolyte, and a manganese dioxide-carbon fibril cathode. The grams of cathode mix per battery refers to the amount of each cathode mix (fibrils, manganese dioxide, and corrosion inhibitor moistened with electrolyte) that will fill 27 cm³ (the volume of a D-cell can filled to within a half inch of the top) when compressed with a force of 10.35 x 10⁵ Pa [150 psi]. The lifetime to 0.65 volts and the utilization capacity (i.e. the area under the current-time curve where time beyond 0.65 volts is not counted) was measured by connecting the battery to a 6 station D-cell battery holder with a 2.2 ohm 3 watt wirewound resistor load across each station. The percent utilization of manganese dioxide was determined by comparing the actual utilized capacity (in ampere-hours) with the theoretical utilization capacity. The latter was determined based upon the number of moles of manganese in the cathode mix. For each mole of manganese that is reduced from Mn⁺⁴ to Mn⁺³, 96,500 coulombs (corresponding to 26.7 ampere-hours) are theoretically utilized.

**Table II**

| Sample No. | 1 | 2 | 3 |
|---|---|---|---|
| Grams of cathode mix per battery | 56 | 56 | 58 |
| Grams of fibrils per battery | 2.88 | 2.33 | 2.33 |
| Grams of MnO₂ per battery | 29.41 | 29.72 | 29.72 |
| Grams of ZnCl₂ per battery | 5.91 | 5.97 | 6.47 |
| Grams of H₂O per battery | 17.73 | 17.92 | 19.42 |
| Lifetime to 0.65v (min.) | 523 | 579 | 605 |
| Utilized capacity (amp-hours) | 4.03 | 4.26 | 4.61 |
| % utilization of MnO₂ | 44.7 | 46.7 | 50.6 |

The cathode can also be prepared by co-milling the chemically reducible material with the microfibers. Moreover, it can be prepared by growing the chemically reducible material in situ within the conductive network formed by the carbon microfibers.

### Fuel Cells and Metal-Air Cells

Carbon microfibers having diameters less than or equal to 0.1 µm are suitable for incorporation in the catalytic electrodes of a wide variety of fuel cells and metal-air cells. Examples of such cells are described in Handbook of Batteries and Fuel Cells, ed. David Linden, ch. 1, p. 10. They include zinc/oxygen (air) cells and hydrogen/oxygen cells. The particular material for the catalytic electrode is chosen based upon the reactants, as one of ordinary skill in the art will readily appreciate. In the case of the zinc/oxygen and hydrogen/oxygen cells, the preferred catalytic material is platinum. The cells are prepared using conventional fabrication techniques.

The carbon microfibers exhibit high electronic conductivity, good corrosion resistance in alkaline and acidic environments, and high accessible surface area. In the fuel cell, they act as a support for the catalytic material (holding it in place and making it accessible to the gaseous reactant) and as a current collector. In the latter application, they increase the electrical conductivity of the electrode by forming an effective electrically conductive network throughout the catalytic electrode material. Preferred microfibers are carbon fibrils having small diameters (preferably between about 3.5 and 75 nanometers), length to diameter ratios of at least 5, and graphitic layers that are substantially parallel to the fibril axis that are also substantially free of a continuous thermal carbon overcoat, as described in Tennent, U.S. Pat. No. 4,663,230; Tennent et al., U.S.S.N. 871,676; Tennent et al., U.S.S.N. 871,675; Snyder et al., U.S.S.N. 149,573; and Mandeville et al., U.S.S.N. 285,817. The fibrils may also be treated to introduce oxygen-containing functional groups onto the fibril surface, as described in McCarthy et al., U.S.S.N. 351,967, or milled, e.g., by mechanical milling (using a ball or stirred ball mill) or by chemical milling (using chemical reagents such as those described in the aforementioned McCarthy application) to decrease the size of fibril aggregates and the lengths of individual fibers.

When produced in useful quantities, the fibrils are in the form of aggregates of individual fibrils. For example, the process described in Snyder at al., U.S.S.N. 149,573 yields aggregates of randomly entangled fibrils resembling bird nests. A second type of aggregate consists of clusters of individual fibrils in which the fibrils are oriented substantially parallel to each other, giving the aggregate the appearance of combed yarn. The lengths and diameters of fibrils in each cluster are essentially uniform, although they may vary from cluster to cluster. These aggregates, and a method for making them, are described below and in Moy, U.S.S.N. entitled "Fibril Aggregates and Method for Making Same" filed concurrently with the present application and assigned to the same assignee as the present application which is hereby incorporated by reference in its entirety.

The substantially parallel graphitic layers of the individual fibrils and small diameters are desirable because they enhance electrical conductivity. The lack of a continuous thermal carbon overcoat leads to enhanced electrical conductivity and oxidation resistance.

### Fibril Aggregates and Method of Preparing Same

We now describe the structure and preparation of preferred fibril aggregates.

### Structure

Preferred fibril aggregates consist of bundles of straight to slightly bent or kinked carbon fibrils in which the individual fibrils have substantially the same relative orientation, e.g., the longitudinal axis of each fibril (despite individual bends or kinks) extends in the same direction as that of the surrounding fibrils in the bundle. This arrangement of individual fibrils gives the aggregates the appearance of combed yarn, in contrast to aggregates such as those produced according to the process described in the aforementioned Snyder et al. application, U.S.S.N. 149,573, in which the fibrils are randomly entangled with each other to form tightly entangled balls of fibrils resembling bird nests.

The carbon fibrils within each fibril aggregate preferably have diameters between about 3.5 and 75 nanometers, length to diameter ratios of at least 5, and graphitic layers that are substantially parallel to the longitudinal fibril axis, and are also substantially free of a continuous thermal carbon overcoat, as described in Tennent, U.S. Pat. No. 4,663,230; Tennent et al., U.S.S.N. 871,676; Tennent et al., U.S.S.N. 871,675; Snyder et al., U.S.S.N. 149,573; and Mandeville et al., U.S.S.N. 285,817. The aggregates may also be treated to introduce oxygen-containing functional groups onto the surface of individual fibrils, as described in McCarthy et al., U.S.S.N. 351,967. Within each fibril aggregate, the diameters and length to diameter ratios of the individual fibrils are essentially uniform.

A second type of fibril aggregate consists of straight to slightly bent or kinked fibrils which are loosely entangled with each other to form an "open mat" structure. The degree of entanglement is greater than observed in the combed yarn aggregates (in which the individual fibrils have substantially the same relative orientation) but less than that of the tightly entangled fibril balls formed according to the process described in Snyder et al., U.S.S.N. 149,573.

### Preparation

In general, both the combed yarn and open mat aggregates are prepared by contacting an iron or iron-containing metal catalyst particle deposited on a support material having one or more readily cleavable surfaces and a surface area of at least 1 m²/g with a carbon-containing gas in a reactor at 400-850°C using the procedures described in the aforementioned Tennent patent and Tennent, Snyder, and Mandeville applications.

Preferred support materials include γ-alumina or magnesia in the form of aggregates of tabular, prismatic, or platelet crystals. Such material is commercially available, e.g., from Strem Chemicals (in the case of γ-alumina) and Alfa Inorganics (in the case of magnesia). The γ-alumina supports yield primarily combed yarn aggregates, while the magnesia supports yield primarily open mat aggregates. In contrast, the use of supports consisting of spherical particles or aggregates lacking cleavable planar surfaces (e.g., supports made of Degussa fumed alumina as described in the aforementioned Snyder et al. application) leads primarily to tightly entangled fibril balls.

While not wishing to be limited to any particular theory, it is believed that the readily cleavable planar surfaces of the support allow the fibrils to assist each other as they grow, creating a "neighbor effect" that, in the case of the γ-alumina support, leads to a combed yarn fibril aggregate in which the individual fibrils have the same relative orientation. Spherical supports, on the other hand, lack this effect, leading to tightly entangled balls of randomly oriented fibrils. The magnesia support, although having readily cleavable planar surfaces, yields primarily lightly entangled, open mat fibril aggregates because it breaks apart more readily than the γ-alumina support during fibril growth, resulting in aggregates that are less ordered than the combed yarn aggregates but more ordered than the tightly entangled fibril balls. The oxide precursors used to generate the metal catalyst particles also affect the tendency of the support to break apart. The more readily the oxide and support can form a mixed oxide at the interface between them, the more likely the support is to break apart.

The following examples describe the preparation of combed yarn and open mat fibril aggregates.

### Example 1

This example describes the preparation of combed yarn fibril aggregates.

200 gm of γ-alumina (Strem Chemicals) was heated at 230°C in a vacuum oven under reduced pressure [25 in.] 63.5cm mercury vacuum) for 5 hrs. Next, it was slurried at room temperature with a solution containing 200 gm Fe(NO₃)₃-9H₂O in 800 cm³ methanol and the slurry agitated thoroughly for 1 hr. The methanol was then removed in a rotary evaporator by gradually reducing pressure and increasing, temperature to boil off the methanol at a reasonable rate; final conditions were [25 in.] 63.5cm mercury vacuum and temperature less than or equal to 55°C. The stripping process took approximately 45 minutes.

After the methanol had been removed, the remaining solids were dried at 160°C under reduced pressure ([15-20 in.] 38.1-50cm mercury vacuum) in a vacuum oven overnight; the typical catalyst yield after drying was 270 gm. Iron loadings were calculated from starting amounts of Fe(NO₃)₃-9H₂O and final weights of dried catalysts. Typical iron loadings ranged from 8-11%.

Fibrils were grown at 680°C in a 2.54cm [1 in.] quartz tube inserted into an electrical furnace. The catalyst was introduced into the reactor at 680°C as a free-flowing powder in a preheated gas stream consisting of 2 parts ethylene and 1 part hydrogen at a flow rate of about 2 liters/min., and deposited on a quartz wool plug placed in contact with a thermocouple in the center of the tube.

In a typical run, 0.100 gm catalyst yielded approximately 1.0 gm carbon fibrils after 4 hrs. at run conditions. The yield of carbon fibrils is expressed as a factor times the weight of catalyst or the weight of iron. Typical yields for this catalyst were 10-11 times based on catalyst and 100-125 times based on iron. Examination of the fibrils using electron microscopy (SEM and STEM) revealed the fibrils to be present as aggregates of straight to gently curving fibrils having the appearance of skeins of brushed or combed yarn. The aggregates generally were still attached to the alumina support.

### Example 2

15.10 gm of γ-alumina (Strem Chemicals) was slurried in a solution of 14.9 gm Co(NO₃)₂-6H₂O in 400 cm³ methanol for 1 hour at room temperature. Methanol was then removed under reduced pressure in a rotary evaporator and dried in a vacuum oven as in Example 1. The calculated cobalt loading was 17.2% by weight.

Fibrils were grown at 680°C according to the procedure described in Example 1. Examination of the fibrils by TEM revealed numerous combed yarn fibril structures in which the individual fibrils were kinked or twisted. The longitudinal axes of the fibrils, however, had the same relative orientation. The fibrils were hollow and had diameters less than 10 nanometers.

### Example 3

14.3 gm γ-alumina (Strem Chemicals) was slurried in a solution of 8.3 gm Ni(NO₃)₂-6H₂O in 400 cm³ methanol for 1 hour at room temperature. Methanol was then removed under reduced pressure in a rotary evaporator and dried in a vacuum oven as in Example 1. The calculated nickel loading was 16.3% by weight.

Fibrils were grown according to the procedure in Example 1. TEM analysis revealed small combed yarn-type aggregates in which the individual fibrils were straight and had diameters of about 15 nanometers.

### Example 4

16.51 gm γ-alumina (Strem Chemicals) was slurried with a solution of 30.2 gm Mn(NO₃)₂ (50% solution in H₂O) dissolved in 400 cm³ methanol. Methanol was then removed under reduced pressure in a rotary evaporator and dried in a vacuum oven as in Example 1. The calculated manganese loading was 16.3% by weight.

Fibrils were grown according to the procedure in Example 1. TEM analysis revealed combed yarn-type aggregates in which the individual fibrils were slightly tangled.

### Example 5

15.11 gm γ-alumina (Strem Chemicals) was slurried with a solution containing 13.8 gm Cu(NO₃)₂-3H₂O and 11.1 gm Zn(NO₃)₂-6H₂O dissolved in 400 cm³ methanol for 1 hour at room temperature. Methanol was then removed under reduced pressure in a rotary evaporator and dried in a vacuum oven as in Example 1. The calculated zinc and copper loadings were 19.1% and 12.9% by weight, respectively.

Fibrils were grown according to the procedure in Example 1. TEM analysis revealed a mixture of combed yarn-type aggregates in which the individual fibrils were straight and had diameters less than 10 nanometers and hollow, open, straight fibrils with diameters less than 10 nanometers.

### Example 6

This example describes the preparation of open mat fibril aggregates.

74 gm magnesia platelets (Alfa Inorganics) was slurried with 400 gm deionized water at 65-70°C for 1 hr. with rapid stirring in a baffled reactor. A solution of 112 gm Fe(NO₃)₃-9H₂O and 5.4 gm (NH₄)₆-Mo₇O₂₄-4H₂O in 150 cm³ deionized water was added dropwise over a period of about 1 hr. at 65°C while maintaining rapid stirring. During the addition, the solids turned chocolate brown.

After addition was complete, the slurry was filtered; the supernatant was colorless (pH = about 5) and the solids were a dark red-brown. After washing several times with deionized water, the solids were dried overnight at 160°C under reduced pressure (15-20 in. mercury vacuum). A typical yield of dried solids was 105 gm. The solids were then calcined at 400°C for 4 hrs. to yield 74 gm catalyst. Iron and molybdenum loadings were calculated to be 20.8% and 4.0%, respectively.

Fibrils were grown using the procedure described in Example 1. Typical fibril yields were 20-25 times based on catalyst, 120-150 times based on iron. Examination by electron microscopy (SEM and STEM) showed that the fibrils were present primarily as loose, open mats with lesser amounts of combed yarn aggregates.

Other suitable support materials include MoO₃ and layered clays, e.g., alumina-, silica-, or magnesia-based clays.

Other embodiments are within the following claims.

## Claims

1. A fibril aggregate comprising a multiplicity of carbon fibrils whose longitudinal axes have substantially the same relative orientation, each of said fibrils characterized as having graphitic layers that are substantially parallel to its longitudinal axis and being free of a continuous thermal carbon overcoat.

2. The fibril aggregate of claim 1 wherein the diameters of at least 90% of the individual fibrils in said aggregate have diameters that are between 3.5 and 75 nanometers.

3. The fibril aggregate of claim 1 wherein the diameters of substantially all of the individual fibrils in said aggregate are between 3.5 and 75 nanometers, inclusive.

4. The fibril aggregate of claim 1 wherein the diameter of said aggregate is between 0.05 and 50 µm, inclusive, and the length of said aggregate is between 0.1 and 1000 µm, inclusive.

5. The fibril aggregate of claim 1 wherein at least 90% of the individual fibrils in said aggregate have a length to diameter ratio of at least 5.

6. The fibril aggregate of claim 1 wherein substantially all of the individual fibrils in said aggregate have a length to diameter ratio of at least 5.

7. A process for preparing the aggregate of carbon fibrils whose longitudinal axes have substantially the same relative orientation, each of said fibrils characterized as having graphitic layers that are substantially parallel to its longitudinal axis and being free of a continuous thermal carbon overcoat, comprising contacting a particulate metal catalyst deposited on a support having one or more readily cleavable planar surfaces and a surface area of at least 1 m²/gm with a carbon-containing gas in a reactor at reaction conditions including temperature sufficient to produce said aggregate.

8. The process of claim 7 wherein said support is a metal oxide.

9. The process of claim 7 wherein said support is γ-alumina in the form of aggregates of tabular, prismatic, or platelet crystals.

10. The process of claim 7 wherein said support is magnesia in the form of tabular, prismatic, or platelet crystals.

11. The process of claim 7 wherein said catalyst comprises iron.

12. The process of claim 11 wherein said catalyst comprises iron and at least one element chosen from Groups V, VI, or VII, or the lanthanides.

13. The process of claim 12 wherein said element is molybdenum.

14. The process of claim 12 wherein said element is chromium.

15. The process of claim 12 wherein said element is manganese.

16. The process of claim 12 wherein said element is tungsten.

17. The process of claim 12 wherein said element is vanadium.

18. The process of claim 12 wherein said element is cerium.

19. The process of claim 7 wherein said catalyst comprises cobalt.

20. The process of claim 7 wherein said catalyst comprises nickel.

21. The process of claim 7 wherein said catalyst comprises manganese.

22. The process of claim 7 wherein said catalyst comprises zinc and copper.

23. The process of claim 7 wherein said temperature is between 400 and 850°C.

24. The process of claim 7 wherein said temperature is between 600 and 750°C.

25. The process of claim 7 wherein said aggregate comprises a multiplicity of fibrils whose longitudinal axes have substantially the same relative orientation, each of said fibrils characterized as having graphitic layers that are substantially parallel to its longitudinal axis and being free of a continuous thermal carbon overcoat.

26. The process of claim 7 wherein said particulate metal catalyst comprises iron; said support is γ-alumina in the form of aggregates of tabular, prismatic, or platelet crystals; and said aggregate comprises a multiplicity of fibrils whose longitudinal axes have substantially the same relative orientation, each of said fibrils characterized as having graphitic layers that are substantially parallel to its longitudinal axis and being free of a continuous thermal carbon overcoat.

27. An aggregate of carbon fibrils prepared according the process of claim 7.

28. A particulate, carbon fibril-forming, metal catalyst deposited on a support having one or more readily cleavable planer surfaces and a surface area of at least 1 m²/gm for use in forming the fibril aggregate as claimed in claim 1.

29. The catalyst of claim 28 wherein said support is a metal oxide.

30. The catalyst of claim 28 wherein said support is γ-alumina in the form of aggregates of tabular, prismatic, or platelet crystals.

31. The catalyst at claim 28 wherein said support is magnesia in the form of aggregates of tabular, prismatic, or platelet crystals.

32. The catalyst of claim 28 wherein said catalyst comprises iron.

33. The catalyst of claim 32 wherein said catalyst comprises iron and at least one element chosen from Groups V, VI, or VII, or the lanthanides.

34. The catalyst of claim 33 wherein said element is molybdenum.

35. The catalyst of claim 33 wherein said element is chromium.

36. The catalyst of claim 23 wherein said element is manganese.

37. The catalyst at claim 33 wherein-said element is tungsten.

38. The catalyst of claim 33 wherein said element is vanadium.

39. The catalyst of claim 33 wherein said element is cerium.

40. The catalyst of claim 28 wherein said catalyst comprises cobalt.

41. The process of claim 28 wherein said catalyst comprises nickel.

42. The process of claim 28 wherein said catalyst comprises manganese.

43. The process of claim 28 wherein said catalyst comprises zinc and copper.

44. In a battery comprising an anode, a cathode that includes a chemically reducible material into which is incorporated an amount of an electrically conductive material sufficient to enhance the electrical conductivity of said chemically reducible material, and an electrolyte, the improvement wherein said electrically conductive material comprises carbon microfibers in the form of the fibril aggregate whose longitudinal axes have substantially the same relative orientation, each of said fibrils characterized as having graphitic layers that are substantially parallel to its longitudinal axis and being free of a continuous thermal carbon overcoat.

45. The battery of claim 44 wherein the diameter of said microfibers is no greater than 0.1 micron.

46. The battery of claim 44 wherein the length to diameter ratio of said microfibers is at least 5.

47. The battery of claim 44 wherein said microfibers comprise tubes having graphitic layers that are substantially parallel to the microfiber axis and diameters between 3.5 and 75 nanometers, inclusive.

48. The battery of claim 47 wherein said microfibers are in the form of aggregates in which individual microfibers are randomly entangled with each other.

49. The battery of claim 47 wherein said microfibers are in the form of aggregates in which individual microfibers are oriented substantially parallel to each other.

50. The battery of claim 44 wherein said battery is a primary battery.

51. The battery of claim 50 wherein said primary battery is a Leclanche battery.

52. The battery of claim 51 wherein the amount of microfibers incorporated into said cathode is less than or equal to 0.5 grams per gram of said chemically reducible material.

53. The battery of claim 52 wherein the amount of microfibers incorporated into said cathode is less than or equal to 0.2 grams per gram of said chemically reducible material.

54. The battery of claim 44 wherein said battery is a secondary battery.

55. The battery of claim 44 wherein said battery is a reserve battery.

56. The battery of claim 44 wherein said battery is an alkaline battery.

57. The battery of claim 56 wherein said alkaline battery is an alkaline zinc - manganese dioxide battery.

58. The battery of claim 57 wherein the amount of microfibers incorporated into said cathode is less than 0.5 grams per gram of said chemically reducible material.

59. The battery of claim 58 wherein the amount of microfibers incorporated into said cathode is less than 0.2 grams per gram of said chemically reducible material.

60. The battery of claim 44 wherein said chemically reducible material comprises a metal oxide.

61. The battery of claim 60 wherein said metal oxide is selected from the group consisting essentially of MnO₂, HgO, Ag₂O, AgO, PbO₂, and NiOOH.

62. The battery of claim 44 wherein said chemically reducible material comprises a metal chloride.

63. The battery of claim 62 wherein said metal chloride is CuCl.

64. The battery of claim 44 wherein said chemically reducible material comprises sulfur or a metal sulfide.

65. The battery of claim 64 wherein said metal sulfide is FeS.

66. The battery of claim 44 wherein said anode is selected from the group consisting essentially of zinc, lithium, cadmium, silver, magnesium, iron, sodium, lithium-aluminum alloy, and lead metal.

67. In a Leclanche battery comprising a zinc anode, a manganese dioxide cathode into which is incorporated an amount of an electrically conductive material sufficient to enhance the electrical conductivity of said manganese dioxide, and an electrolyte, the improvement wherein said electrically conductive material includes carbon microfibers in the form of the fibril aggregate whose longitudinal axes have substantially the same relative orientation, each of said fibrils characterized as having graphitic layers that are substantially parallel to its longitudinal axis and being free of a continuous thermal carbon overcoat.

68. In an alkaline zinc-manganese dioxide battery comprising a zinc anode, a manganese dioxide cathode into which is incorporated an amount of an electrically conductive material sufficient to enhance the electrical conductivity of said manganese dioxide, and an alkaline electrolyte, the improvement wherein said electrically conductive material includes carbon microfibers in the form of the fibril aggregate whose longitudinal axes have substantially the same relative orientation, each of said fibrils characterized as having graphitic layers that are substantially parallel to its longitudinal axis and being free of a continuous thermal carbon overcoat.

69. A method of preparing a cathode for a battery comprising combining a chemically reducible material with an amount of carbon microfibers sufficient to enhance the electrical conductivity of said chemically reducible material, wherein said carbon microfibers are in the form of the fibril aggregate as claimed in claim 1.

70. The method of claim 69 further comprising milling said microfibers.

71. The method of claim 70 wherein said microfibers are mechanically milled.

72. The method of claim 70 wherein said microfibers are chemically milled.

73. The method of claim 70 wherein said microfibers are co-milled with said chemically reducible material.

74. The method of claim 69 wherein said combination is effected by growing said chemically reducible material in situ within the electrically conductive network formed by said carbon microfibers.

75. In an electrochemical cell comprising a catalytic electrode on which an electrochemical reaction occurs, the improvement wherein microfibers having diameters less than or equal to 0.1 micron are incorporated in said electrode in an amount sufficient to enhance the electrical conductivity of said electrode and said carbon microfibers are in the form of the fibril aggregate whose longitudinal axes have substantially the same relative orientation, each of said fibrils characterized as having graphitic layers that are substantially parallel to its longitudinal axis and being free of a continuous thermal carbon overcoat.

76. The electrochemical cell of claim 75 wherein the length to diameter ratio of said microfibers is at least 5.

77. The electrochemical cell of claim 75 wherein said microfibers comprise tubes having graphitic layers that are substantially parallel to the microfiber axis and diameters between 3.5 and 75 nanometers, inclusive.

78. The electrochemical cell of claim 77 wherein said microfibers are in the form of aggregates in which individual microfibers are randomly entangled with each other.

79. The electrochemical cell of claim 77 wherein said microfibers are in the form of aggregates in which individual microfibers are oriented substantially parallel to each other.

80. The electrochemical cell of claim 75 wherein said cell is a fuel cell.

81. The electrochemical cell of claim 80 wherein said fuel cell is a hydrogen/oxygen fuel cell.

82. The electrochemical cell of claim 75 wherein said cell is a metal-air cell.

83. The electrochemical cell of claim 82 wherein said metal is zinc.

## Patentansprüche

1. Fibrillenaggregat, umfassend eine Vielfalt von Kohlenstoffibrillen, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen und dass sie keine kontinuierliche thermische Kohlenstoffdeckschicht aufweist.

2. Fibrillenaggregat gemäss Anspruch 1, wobei die Durchmesser von mindestens 90 % der einzelnen Fibrillen in dem Aggregat Durchmesser zwischen 3,5 und 75 nm sind.

3. Fibrillenaggregat gemäss Anspruch 1, wobei die Durchmesser im wesentlichen aller einzelner Fibrillen in dem Aggregat 3,5 bis 75 nm betragen.

4. Fibrillenaggregat gemäss Anspruch 1, wobei der Durchmesser des Aggregats 0,05 bis 50 µm beträgt, und die Länge des Aggregats 0,1 bis 1000 µm beträgt.

5. Fibrillenaggregat gemäss Anspruch 1, wobei mindestens 90 % der einzelnen Fibrillen in dem Aggregat ein Längen-Durchmesser-Verhältnis von mindestens 5 aufweisen.

6. Fibrillenaggregat gemäss Anspruch 1, wobei im wesentlichen alle einzelnen Fibrillen in dem Aggregat ein Längen-Durchmesser-Verhältnis von mindestens 5 aufweisen.

7. Verfahren zur Herstellung eines Aggregats von Kohlenstoffibrillen, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist, umfassend das In-Kontakt-Bringen eines partikulären Metallkatalysators, der auf einem Träger mit einer oder mehreren leicht spaltbaren planaren Oberflächen und einer Oberfläche von mindestens 1 m²/g abgeschieden ist, mit einem kohlenstoffhaltigen Gas in einem Reaktor bei Reaktionsbedingungen, einschliesslich einer Temperatur, die zur Herstellung des Aggregats ausreichend sind.

8. Verfahren gemäss Anspruch 7, wobei der Träger ein Metalloxid ist.

9. Verfahren gemäss Anspruch 7, wobei der Träger γ-Aluminiumoxid in Form von Aggregaten tafelförmiger, prismaförmiger oder plättchenförmiger Kristalle ist.

10. Verfahren gemäss Anspruch 7, wobei der Träger Magnesiumoxid in Form von tafelförmigen, prismaförmigen oder plättchenförmigen Kristallen ist.

11. Verfahren gemäss Anspruch 7, wobei der Katalysator Eisen umfasst.

12. Verfahren gemäss Anspruch 11, wobei der Katalysator Eisen und mindestens ein Element, ausgewählt aus den Gruppen V, VI oder VII, oder der Lanthanide umfasst.

13. Verfahren gemäss Anspruch 12, wobei das Element Molybdän ist.

14. Verfahren gemäss Anspruch 12, wobei das Element Chrom ist.

15. Verfahren gemäss Anspruch 12, wobei das Element Mangan ist.

16. Verfahren gemäss Anspruch 12, wobei das Element Wolfram ist.

17. Verfahren gemäss Anspruch 12, wobei das Element Vanadium ist.

18. Verfahren gemäss Anspruch 12, wobei das Element Cer ist.

19. Verfahren gemäss Anspruch 7, wobei der Katalysator Kobalt umfasst.

20. Verfahren gemäss Anspruch 7, wobei der Katalysator Nickel umfasst.

21. Verfahren gemäss Anspruch 7, wobei der Katalysator Mangan umfasst.

22. Verfahren gemäss Anspruch 7, wobei der Katalysator Zink und Kupfer umfasst.

23. Verfahren gemäss Anspruch 7, wobei die Temperatur zwischen 400 und 850°C liegt.

24. Verfahren gemäss Anspruch 7, wobei die Temperatur zwischen 600 und 750°C liegt.

25. Verfahren gemäss Anspruch 7, wobei das Aggregat eine Vielfalt von Fibrillen umfasst, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und das sie keine kontinuierliche thermische Kohlenstoffdeckschicht aufweist.

26. Verfahren gemäss Anspruch 7, wobei der partikuläre Metallkatalysator Eisen umfasst; der Träger γ-Aluminiumoxid in Form von Aggregaten tafelförmiger, prismaförmiger oder plättchenförmiger Kristalle ist; und das Aggregat eine Vielfalt von Fibrillen umfasst, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist.

27. Aggregat von Kohlenstoffibrillen, hergestellt gemäss dem Verfahren gemäss Anspruch 7.

28. Partikulärer Kohlenstoffibrillen-bildender Metallkatalysator, abgeschieden auf einem Träger mit einer oder mehreren leicht spaltbaren planaren Oberflächen und einer Oberfläche von mindestens 1 m²/g, zur Verwendung der Bildung des Fibrillenaggregats gemäss Anspruch 1.

29. Katalysator gemäss Anspruch 28, wobei der Träger ein Metalloxid ist.

30. Katalysator gemäss Anspruch 28, wobei der Träger γ-Aluminiumoxid in Form von Aggregaten tafelförmiger, prismaförmiger oder plättchenförmiger Kristalle ist.

31. Katalysator gemäss Anspruch 28, wobei der Träger Magnesiumoxid in Form von Aggregaten tafelförmiger, prismaförmiger oder plättchenförmiger Kristalle ist.

32. Katalysator gemäss Anspruch 28, wobei der Katalysator Eisen umfasst.

33. Katalysator gemäss Anspruch 32, wobei der Katalysator Eisen und mindestens ein Element, ausgewählt aus den Gruppen V, VI oder VII, oder der Lanthanide umfasst.

34. Katalysator gemäss Anspruch 33, wobei das Element Molybdän ist.

35. Katalysator gemäss Anspruch 33, wobei das Element Chrom ist.

36. Katalysator gemäss Anspruch 33, wobei das Element Mangan ist.

37. Katalysator gemäss Anspruch 33, wobei das Element Wolfram ist.

38. Katalysator gemäss Anspruch 33, wobei das Element Vanadium ist.

39. Katalysator gemäss Anspruch 33, wobei das Element Cer ist.

40. Katalysator gemäss Anspruch 28, wobei der Katalysator Kobalt umfasst.

41. Katalysator gemäss Anspruch 28, wobei der Katalysator Nickel umfasst.

42. Katalysator gemäss Anspruch 28, wobei der Katalysator Mangan umfasst.

43. Katalysator gemäss Anspruch 28, wobei der Katalysator Zink und Kupfer umfasst.

44. Batterie, umfassend eine Anode, eine Kathode, die ein chemisch reduzierbares Material enthält, in das eine ausreichende Menge eines elektrisch leitfähigen Materials eingebaut ist, um die elektrische Leitfähigkeit des chemisch reduzierbaren Materials zu verstärken, und einen Elektrolyten, wobei die Verbesserung darin liegt, dass das elektrisch leitfähige Material Kohlenstoffmikrofasern in Form eines Fibrillenaggregats umfasst, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist.

45. Batterie gemäss Anspruch 44, wobei der Durchmesser der Mikrofasern nicht grösser als 0,1 µm ist.

46. Batterie gemäss Anspruch 44, wobei das Längen-Durchmesser-Verhältnis der Mikrofasern mindestens 5 beträgt.

47. Batterie gemäss Anspruch 44, wobei die Mikrofasern Röhren mit Graphitschichten umfassen, die im wesentlichen parallel zu der Mikrofaserachse verlaufen und Durchmesser von 3,5 bis 75 nm aufweisen.

48. Batterie gemäss Anspruch 47, wobei die Mikrofasern in Form von Aggregaten vorliegen, wobei die einzelnen Mikrofasern statistisch miteinander verhakt sind.

49. Batterie gemäss Anspruch 47, wobei die Mikrofasern in Form von Aggregaten vorliegen, wobei die einzelnen Mikrofasern im wesentlichen parallel zueinander orientiert sind.

50. Batterie gemäss Anspruch 44, wobei die Batterie eine Primärbatterie ist.

51. Batterie gemäss Anspruch 50, wobei die Primärbatterie eine Leclanche-Batterie ist.

52. Batterie gemäss Anspruch 51, wobei die Menge der Mikrofasern, die in die Kathode eingebaut sind, nicht weniger oder gleich 0,5 g/g des chemisch reduzierbaren Materials beträgt.

53. Batterie gemäss Anspruch 52, wobei die Menge der Mikrofasern, die in die Kathode eingebaut sind, nicht weniger oder gleich 0,2 g/g des chemisch reduzierbaren Materials beträgt.

54. Batterie gemäss Anspruch 44, wobei die Batterie eine Sekundärbatterie ist.

55. Batterie gemäss Anspruch 44, wobei die Batterie eine Reservebatterie ist.

56. Batterie gemäss Anspruch 44, wobei die Batterie eine alkalische Batterie ist.

57. Batterie gemäss Anspruch 56, wobei die alkalische Batterie eine alkalische Zink-Manganoxid-Batterie ist.

58. Batterie gemäss Anspruch 57, wobei die Menge der Mikrofasern, die in die Kathode eingebaut sind, nicht weniger als 0,5 g/g des chemisch reduzierbaren Materials beträgt.

59. Batterie gemäss Anspruch 58, wobei die Menge der Mikrofasern, die in die Kathode eingebaut sind, weniger als 0,2 g/g des chemisch reduzierbaren Materials beträgt.

60. Batterie gemäss Anspruch 44, wobei das chemisch reduzierbare Material ein Metalloxid umfasst.

61. Batterie gemäss Anspruch 60, wobei das Metalloxid ausgewählt wird aus der Gruppe bestehend im wesentlichen aus MnO₂, HgO, Ag₂O, AgO, PbO₂ und NiOOH.

62. Batterie gemäss Anspruch 44, wobei das chemisch reduzierbare Material ein Metallchlorid umfasst.

63. Batterie gemäss Anspruch 62, wobei das Metallchlorid CuCl ist.

64. Batterie gemäss Anspruch 44, wobei das chemisch reduzierbare Material Schwefel oder ein Metallsulfid umfasst.

65. Batterie gemäss Anspruch 64, wobei das Metallsulfid FeS ist.

66. Batterie gemäss Anspruch 44, wobei die Anode ausgewählt wird aus der Gruppe bestehend im wesentlichen aus Zink, Lithium, Cadmium, Silber, Magnesium, Eisen, Natrium, Lithium-Aluminium-Legierung und Bleimetall.

67. Leclanche-Batterie, umfassend eine Zinkanode, eine Mangandioxidkathode, in die eine ausreichende Menge eines elektrisch leitfähigen Materials eingebaut ist, um die elektrische Leitfähigkeit des Mangandioxids zu verstärken, und einen Elektrolyten, wobei die Verbesserung darin liegt, dass das elektrisch leitfähige Material Kohlenstoffmikrofasern in Form eines Fibrillenaggregats umfasst, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist.

68. Alkalische Zink-Mangandioxid-Batterie, umfassend eine Zinkanode, eine Mangandioxidkathode, in die eine ausreichende Menge eines elektrisch leitfähigen Materials eingebaut ist, um die elektrische Leitfähigkeit des Mangandioxids zu verstärken, und einen alkalischen Elektrolyten, wobei die Verbesserung darin liegt, dass das elektrisch leitfähige Material Kohlenstoffmikrofasern in Form eines Fibrillenaggregats enthält, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist.

69. Verfahren zur Herstellung einer Kathode für eine Batterie, umfassend das Vereinen eines chemisch reduzierbaren Materials mit einer ausreichenden Menge Kohlenstoffmikrofasern, um die elektrische Leitfähigkeit des chemisch reduzierbaren Materials zu verstärken, wobei die Kohlenstoffmikrofasern in Form des Fibrillenaggregats gemäss Anspruch 1 vorliegen.

70. Verfahren gemäss Anspruch 69, weiterhin umfassend das Mahlen der Mikrofasern.

71. Verfahren gemäss Anspruch 70, wobei die Mikrofasern mechanisch gemahlen werden.

72. Verfahren gemäss Anspruch 70, wobei die Mikrofasern chemisch gemahlen werden.

73. Verfahren gemäss Anspruch 70, wobei die Mikrofasern zusammen mit dem chemisch reduzierbaren Material gemahlen werden.

74. Verfahren gemäss Anspruch 69, wobei das Vereinen durch Wachsen des chemisch reduzierbaren Materials in situ in dem elektrisch leitfähigen Netzwerk, das durch die Kohlenstoffmikrofasern gebildet wird, bewirkt wird.

75. Elektrochemische Zelle, umfassend eine katalytische Elektrode, an der eine elektrochemische Reaktion auftritt, wobei die Verbesserung darin liegt, dass Mikrofasern mit Durchmessern von weniger als oder gleich 0,1 µm in die Elektrode in einer ausreichenden Menge eingebaut werden, um die elektrische Leitfähigkeit der Elektrode zu verstärken, und dass die Kohlenstoffmikrofasern in Form eines Fibrillenaggregats vorliegen, deren Längsachsen im wesentlichen die gleiche relative Orientierung aufweisen, wobei jede der Fibrillen dadurch gekennzeichnet ist, dass sie Graphitschichten aufweist, die im wesentlichen parallel zu ihrer Längsachse verlaufen, und dass sie keine kontinuierliche thermische Kohlenstoffdeckschicht aufweist.

76. Elektrochemische Zelle gemäss Anspruch 75, wobei das Längen-Durchmesser-Verhältnis der Mikrofasern mindestens 5 beträgt.

77. Elektrochemische Zelle gemäss Anspruch 75, wobei die Mikrofasern Röhren mit Graphitschichten, die im wesentlichen parallel zu der Mikrofaserachse vorliegen, und Durchmesser von 3,5 bis 75 nm umfassen.

78. Elektrochemische Zelle gemäss Anspruch 77, wobei die Mikrofasern in Form von Aggregaten vorliegen, wobei die einzelnen Mikrofasern statistisch miteinander verhakt sind.

79. Elektrochemische Zelle gemäss Anspruch 77, wobei die Mikrofasern in Form von Aggregaten vorliegen, wobei die einzelnen Mikrofasern im wesentlichen parallel zueinander orientiert sind.

80. Elektrochemische Zelle gemäss Anspruch 75, wobei die Zelle eine Brennstoffzelle ist.

81. Elektrochemische Zelle gemäss Anspruch 80, wobei die Brennstoffzelle eine Wasserstoff-Sauerstoff-Brennstoffzelle ist.

82. Elektrochemische Zelle gemäss Anspruch 75, wobei die Zelle eine Metall-Luft-Zelle ist.

83. Elektrochemische Zelle gemäss Anspruch 82, wobei das Metall Zink ist.

## Revendications

1. Agrégat de fibrilles comprenant de multiples fibrilles de carbone dont les axes longitudinaux ont sensiblement la même orientation relative, chacune desdites fibrilles étant caractérisée comme possédant des couches de graphite qui sont sensiblement parallèles à son axe longitudinal et comme n'ayant pas un revêtement thermique continu de carbone.

2. Agrégat de fibrilles selon la revendication 1, dans lequel les diamètres d'au moins 90% des fibrilles individuelles dudit agrégat ont des diamètres qui sont entre 3,5 et 75 nanomètres.

3. Agrégat de fibrilles selon la revendication 1, dans lequel les diamètres de pratiquement toutes les fibrilles individuelles dudit agrégat sont entré 3,5 et 75 nanomètres, inclusivement.

4. Agrégat de fibrilles selon la revendication 1, dans lequel le diamètre dudit agrégat est entre 0,05 et 50 µm, inclusivement, et la longueur dudit agrégat est entre 0,1 et 1000 µm, inclusivement.

5. Agrégat de fibrilles selon la revendication 1, dans lequel au moins 90% des fibrilles individuelles dudit agrégat ont un rapport entre la longueur et le diamètre d'au moins 5.

6. Agrégat de fibrilles selon la revendication 1, dans lequel pratiquement toutes les fibrilles individuelles dudit agrégat ont un rapport entre la longueur et le diamètre d'au moins 5.

7. Procédé pour la préparation de l'agrégat le fibrilles de carbone dont les axes longitudinaux ont pratiquement la même orientation relative, chacune desdites fibrilles étant caractérisée comme possédant des couches de graphite qui sont pratiquement parallèles à son axe longitudinal et en ce qu'elle est sans revêtement de carbone thermique continu, comprenant la mise en contact d'un catalyseur de métal particulaire déposé sur un support ayant une ou plusieurs surfaces planes facilement clivables et une zone de surface d'au moins 1 m²/gm avec un gaz contenant du carbone dans un réacteur dans des conditions de réaction, y compris une température, suffisantes pour produire ledit agrégat.

8. Procédé selon la revendication 7, dans lequel ledit support est un oxyde de métal.

9. Procédé selon la revendication 7, dans lequel ledit support est en γ-alumine présentant la forme d'agrégats de cristaux tabulaires, prismatiques ou en paillettes.

10. Procédé selon la revendication 7, dans lequel ledit support est de la magnésie présentant la forme d'agrégats de cristaux tabulaires, prismatiques ou en paillettes.

11. Procédé selon la revendication 7, dans lequel ledit catalyseur comprend du fer.

12. Procédé selon la revendication 11, dans lequel ledit catalyseur comprend du fer et au moins un élément choisi parmi les Groupes V, VI ou VII, ou parmi les lanthanides.

13. Procédé selon la revendication 12, dans lequel ledit élément est du molybdène.

14. Procédé selon la revendication 12, dans lequel ledit élément est du chrome.

15. Procédé selon la revendication 12, dans lequel ledit élément est du manganèse.

16. Procédé selon la revendication 12, dans lequel ledit élément est du tungstène.

17. Procédé selon la revendication 12, dans lequel ledit élément est du vanadium.

18. Procédé selon la revendication 12, dans lequel ledit élément est du cérium.

19. Procédé selon la revendication 7, dans lequel ledit catalyseur comprend du cobalt.

20. Procédé selon la revendication 7, dans lequel ledit catalyseur comprend du nickel.

21. Procédé selon la revendication 7, dans lequel ledit catalyseur comprend du manganèse.

22. Procédé selon la revendication 7, dans lequel ledit catalyseur comprend du zinc et du cuivre.

23. Procédé selon la revendication 7, dans lequel ladite température se trouve entre 400 et 850°C.

24. Procédé selon la revendication 7, dans lequel ladite température est entre 600 et 750°C.

25. Procédé selon la revendication 7, dans lequel ledit agrégat comprend de multiples fibrilles dont les axes longitudinaux ont pratiquement la même orientation relative, chacune desdites fibrilles étant caractérisée comme possédant des couches de graphite qui sont pratiquement parallèles à son axe longitudinal et comme n'ayant pas un revêtement thermique continu de carbone.

26. Procédé selon la revendication 7, dans lequel ledit catalyseur de métal particulaire comprend du fer ; ledit support est de la γ-alumine présentant la forme d'agrégats de cristaux tabulaires, prismatiques ou en paillettes ; et ledit agrégat comprend de multiples fibrilles dont les axes longitudinaux ont pratiquement la même orientation relative, chacune desdites fibrilles étant caractérisée comme possédant des couches de graphite qui sont pratiquement parallèles à son axe longitudinal et comme n'ayant pas un revêtement thermique continu de carbone.

27. Agrégat de fibrilles de carbone préparé selon le procédé de la revendication 7.

28. Catalyseur de métal particulaire, formant des fibrilles de carbone, déposé sur un support possédant une ou plusieurs surfaces planes facilement clivables et une zone de surface d'au moins 1 m²/gm destiné à être utilisé pour la formation de l'agrégat de fibrilles selon la revendication 1.

29. Catalyseur selon la revendication 28, dans lequel ledit support est un oxyde de métal.

30. Catalyseur selon la revendication 28, dans lequel ledit support est de la γ-alumine ayant la forme d'agrégats de cristaux tabulaires, prismatiques ou en paillettes.

31. Catalyseur selon la revendication 28, dans lequel ledit support est de la magnésie présentant la forme d'agrégats de cristaux tabulaires, prismatiques ou en paillettes.

32. Catalyseur selon la revendication 28, dans lequel ledit catalyseur comprend du fer.

33. Catalyseur selon la revendication 32, dans lequel ledit catalyseur comprend du fer et au moins un élément choisi parmi les Groupes V, VI, ou VII, ou parmi les lahthanides.

34. Catalyseur selon la revendication 33, dans lequel ledit élément est du molybdène.

35. Catalyseur selon la revendication 33, dans lequel ledit élément est du chrome.

36. Catalyseur selon la revendication 33, dans lequel ledit élément est du manganèse.

37. Catalyseur selon la revendication 33, dans lequel ledit élément est du tungstène.

38. Catalyseur selon la revendication 33, dans lequel ledit élément est du vanadium.

39. Catalyseur selon la revendication 33, dans lequel ledit élément est du cérium.

40. Catalyseur selon la revendication 28, dans lequel ledit catalyseur comprend du cobalt.

41. Procédé selon la revendication 28, dans lequel ledit catalyseur comprend du nickel.

42. Procédé selon la revendication 28, dans lequel ledit catalyseur comprend du manganèse.

43. Procédé selon la revendication 28, dans lequel ledit catalyseur comprend du zinc et du cuivre.

44. Batterie comprenant une anode, une cathode qui comprend un matériau chimiquement réductible dans lequel est incorporé une quantité d'un matériau électriquement conducteur suffisante pour augmenter la conductivité dudit matériau chimiquement réductible, et un électrolyte, l'amélioration étant que ledit matériau électriquement conducteur comprend des microfibres de carbone présentant la forme d'un agrégat de fibrilles dont les axes longitudinaux ont pratiquement la même orientation relative, chacune desdites fibrilles étant caractérisée comme possédant des couches de graphite qui sont pratiquement parallèles à son axe longitudinal et en ce qu'elle n'a pas de revêtement thermique continu de carbone.

45. Batterie selon la revendication 44, dans laquelle le diamètre desdites microfibres n'est pas supérieur à 0,1 micron.

46. Batterie selon la revendication 44, dans laquelle le rapport entre la longueur et le diamètre desdites microfibres est au moins 5.

47. Batterie selon la revendication 44, dans laquelle lesdites microfibres comprennent des tubes possédant des couches de graphite qui sont pratiquement parallèles à l'axe des microfibres et ont des diamètres entre 3,5 et 75 nanomètres, inclusivement.

48. Batterie selon la revendication 47, dans laquelle lesdites microfibres se présentent sous la forme d'agrégats dans lesquels des microfibres individuelles sont emmêlées les unes avec les autres de manière aléatoire.

49. Batterie selon la revendication 47, dans laquelle lesdites microfibres se présentent sous la forme d'agrégats dans lesquels les microfibres individuelles sont orientées pratiquement en parallèle les unes avec les autres.

50. Batterie selon la revendication 44, dans laquelle ladite batterie est une batterie primaire.

51. Batterie selon la revendication 50, dans laquelle ladite batterie primaire est une batterie Leclanché.

52. Batterie selon la revendication 51, dans laquelle la quantité de microfibres incorporées dans ladite cathode est inférieure ou égale à 0,5 gramme par gramme dudit matériau chimiquement réductible.

53. Batterie selon la revendication 52, dans laquelle la quantité de microfibres incorporées dans ladite cathode est inférieure ou égale à 0,2 gramme par gramme dudit matériau chimiquement réductible.

54. Batterie selon la revendication 44, dans laquelle ladite batterie est une batterie secondaire.

55. Batterie selon la revendication 44, dans laquelle ladite batterie est une batterie de réserve.

56. Batterie selon la revendication 44, dans laquelle ladite batterie est une batterie alcaline.

57. Batterie selon la revendication 56, dans laquelle ladite batterie alcaline est une batterie alcaline de dioxyde de manganèse-zinc.

58. Batterie selon la revendication 57, dans laquelle la quantité de microfibres incorporées dans ladite cathode est inférieure à 0,5 gramme par gramme dudit matériau chimiquement réductible.

59. Batterie selon la revendication 58, dans laquelle la quantité de microfibres incorporées dans ladite cathode est inférieure à 0,2 gramme par gramme dudit matériau chimiquement réductible.

60. Batterie selon la revendication 44, dans laquelle ledit matériau chimiquement réductible comprend un oxyde de métal.

61. Batterie selon la revendication 60, dans laquelle ledit oxyde de métal est choisi dans le groupe composé essentiellement du MnO₂, HgO, Ag₂O, AgO, PbO₂, et du NiOOH.

62. Batterie selon la revendication 44, dans laquelle ledit matériau chimiquement réductible comprend un chlorure de métal.

63. Batterie selon la revendication 62, dans laquelle ledit chlorure de métal est du CuCl.

64. Batterie selon la revendication 44, dans laquelle ledit matériau chimiquement réductible comprend du soufre ou un sulfure de métal.

65. Batterie selon la revendication 64, dans laquelle ledit sulfure de métal est du FeS.

66. Batterie selon la revendication 44, dans laquelle ladite anode est sélectionnée dans le groupe composé essentiellement par le zinc, le lithium, le cadmium, l'argent, le magnésium, le fer, le sodium, un alliage de lithium et d'aluminium, et le plomb métallique.

67. Dans une batterie Leclanché comprenant une anode en zinc, une cathode en dioxyde de manganèse dans laquelle est incorporée une quantité de matériau électriquement conducteur suffisante pour augmenter la conductivité électrique dudit dioxyde de manganèse, et un électrolyte, l'amélioration par laquelle ledit matériau électriquement conducteur comprend des microfibres de carbone se présentant sous la forme d'un agrégat de fibrilles dont les axes longitudinaux ont pratiquement la même orientation relative, chacune desdites fibrilles étant caractérisée comme possédant des couches de graphite qui sont pratiquement parallèles à son axe longitudinal et comme n'ayant pas un revêtement thermique continu de carbone.

68. Dans une batterie alcaline de dioxyde de manganèse-zinc comprenant une anode en zinc, une cathode en dioxyde de manganèse dans laquelle est incorporée une quantité d'un matériau électriquement conducteur suffisante pour augmenter la conductivité électrique dudit dioxyde de manganèse, et un électrolyte alcalin, l'amélioration par laquelle ledit matériau électriquement conducteur comprend des microfibres de carbone se présentant sous la forme d'un agrégat de fibrilles dont les axes longitudinaux ont pratiquement la même orientation relative, chacune desdites fibrilles étant caractérisée comme possédant des couches de graphite qui sont pratiquement parallèles à son axe longitudinal et comme n'ayant pas un revêtement thermique continu de carbone.

69. Procédé de préparation d'une cathode destinée à une batterie comprenant la combinaison d'un matériau chimiquement réductible avec une quantité de microfibres de carbone suffisante pour améliorer la conductivité électrique dudit matériau chimiquement réductible, dans lequel lesdites microfibres de carbone se présentent sous la forme de l'agrégat de fibrilles tel que revendiqué dans la revendication 1.

70. Procédé selon la revendication 69, comprenant en outre le broyage desdites microfibres.

71. Procédé selon la revendication 70, dans lequel lesdites microfibres sont broyées mécaniquement.

72. Procédé selon la revendication 70, dans lequel lesdites microfibres sont broyées chimiquement.

73. Procédé selon la revendication 70, dans lequel lesdites microfibres sont co-broyées avec ledit matériau chimiquement réductible.

74. Procédé selon la revendication 69, dans lequel ladite combinaison est effectuée en développant in situ ledit matériau chimiquement réductible à l'intérieur du réseau électriquement conducteur formé par lesdites microfibres de carbone.

75. Dans une cellule électrochimique comprenant une électrode catalytique sur laquelle une réaction électrochimique se produit, l'amélioration par laquelle les microfibres ayant des diamètres inférieurs ou égaux à 0,1 micron sont incorporées dans ladite électrode dans une quantité suffisante pour augmenter la conductivité électrique de ladite électrode et lesdites microfibres de carbone se présentent sous la forme de l'agrégat de fibrilles dont les axes longitudinaux ont pratiquement la même orientation relative, chacune desdites fibrilles étant caractérisée comme possédant des couches de graphite qui sont pratiquement parallèles à son axe longitudinal et comme n'ayant pas un revêtement thermique continu de carbone.

76. Cellule électrochimique selon la revendication 75, dans laquelle le rapport entre la longueur et le diamètre desdites microfibres est au moins 5.

77. Cellule électrochimique selon la revendication 75, dans laquelle lesdites microfibres comprennent des tubes possédant des couches de graphite qui sont pratiquement parallèles à l'axe des microfibres et des diamètres entre 3,5 et 75 nanomètres, inclusivement.

78. Cellule électrochimique selon la revendication 77, dans laquelle lesdites microfibres se présentent sous la forme d'agrégats dans lesquels des microfibres individuelles sont emmêlées les unes avec les autres de manière aléatoire.

79. Cellule électrochimique selon la revendication 77, dans laquelle lesdites microfibres se présentent sous la forme d'agrégats dans lesquels les microfibres individuelles sont orientées pratiquement en parallèle les unes avec les autres.

80. Cellule électrochimique selon la revendication 75, dans laquelle ladite cellule est une cellule de carburant.

81. Cellule électrochimique selon la revendication 80, dans laquelle ladite cellule de carburant est une cellule de carburant à base d'hydrogène et d'oxygène.

82. Cellule électrochimique selon la revendication 75, dans laquelle ladite cellule est une cellule de métal et d'air.

83. Cellule électrochimique selon la revendication 82, dans laquelle ledit métal est du zinc.
